# EUROPÄISCHE PATENTSCHRIFT

(11) **EP 1 965 182 B1**
(45) Veröffentlichungstag und Bekanntmachung des Hinweises auf die Patenterteilung: **15.06.2016**
(21) Anmeldenummer: 08001808.8
(22) Anmeldetag: 31.01.2008
(51) Int. Cl.: G01F 23/284

(54) **Füllstandsmessgerät**
Filling level sensor device
Appareil de mesure du niveau de remplissage

(30) Priorität: 02.03.2007 DE 102007010627
(43) Veröffentlichungstag der Anmeldung: 03.09.2008
(73) Patentinhaber: KROHNE MESSTECHNIK GMBH & CO. KG, 47058 Duisburg (DE)
(72) Erfinder: Gerding, Michael, 44623 Herne (DE); Musch, Thomas, 45481 Mühlheim (DE); Neuburger, Stephan, 55271 Stadecken-Elsheim (DE)
(74) Vertreter: Gesthuysen Patent- und Rechtsanwälte

(56) Entgegenhaltungen:
- EP-A1- 1 128 169
- JP-A- H07 239 263
- US-A- 5 910 188
- US-B2- 6 690 320
- "NEW SENSING TECHNIQUES SET TO MAKE AN IMPACT", CONTROL AND INSTRUMENTATION, MORGAN-GRAMPIAN LTD. LONDON, GB, vol. 19, no. 12, 1 December 1987 (1987-12-01), pages 41-43, XP002126674, ISSN: 0010-8022

## Beschreibung

Die Erfindung betrifft ein Füllstandsmessgerät, das nach dem Radar-Prinzip arbeitet, zur Messung des Füllstands eines in einem Behälter vorgesehenen Mediums, mit einer elektrischen Leiteranordnung, zum Führen eines elektromagnetischen Signals in den Behälter hinein und zum Führen reflektierter Anteile des elektromagnetischen Signals aus dem Behälter heraus.

Das Meßverfahren eines Füllstandsmessgeräts, das nach dem Radar-Prinzip arbeitet und bei dem eine elektrische Leiteranordnung zum Führen eines elektromagnetischen Signals in den Behälter und zurück vorgesehen ist, basiert auf dem TDR-Meßprinzip (Time Domain Reflectometry), das z. B. aus dem Bereich der Kabelprüfung bekannt ist und Ähnlichkeiten mit der Funktionsweise von herkömmlichen Radargeräten aufweist. Bei einem derartigen TDR-Füllstandsmessgerät wird z. B. ein extrem kurzer elektrischer Impuls über eine im wesentlichen gerade verlaufende elektrische Leiteranordnung in einen Behälter ausgesandt, in dem sich ein Medium, wie eine Flüssigkeit, ein Pulver oder ein Granulat befindet, dessen Füllstandshöhe bestimmt werden soll. Dabei ist typischerweise eine derartige elektrische Leiteranordnung vorgesehen, die in das Medium hineinreicht und als Einfachleiter oder als Doppelleiter ausgeführt ist. Ist die elektrische Leiteranordnung als Doppelleiter ausgerührt, so kann sie z. B. zwei parallel zueinander verlaufende Leiter aufweisen oder als Koaxialleitung ausgebildet sein.

Ein in eine derartige aus einem Doppelleiter bestehende elektrische Anordnung eingekoppelter Impuls läuft praktisch "zwischen" den beiden Leitern in den Behälter hinein und wird dann an der Oberfläche des Mediums wenigstens teilweise reflektiert, wobei der reflektierte Anteil des kurzen elektrischen Impulses im allgemeinen von einer Auswerteelektronik empfangen wird, um die Laufzeit und damit die Füllstandshöhe des Mediums im Behälter zu bestimmen. Der reflektierte Anteil des kurzen elektrischen Impulses hängt von der Dielektrizitätszahl des Mediums ab und steigt mit dieser. Dabei ist die Laufzeit des Signals proportional zur Füllstandshöhe des in dem Behälter befindlichen Mediums. Sich verändernde Umgebungsbedingungen, wie ein steigender oder ein fallender Umgebungsdruck oder eine steigende oder eine fallende Temperatur, beeinträchtigen die Meßgenauigkeit des TDR-Füllstandsmessgeräts nicht. Außerdem ist die Laufzeit des Signals unabhängig von der Dielektrizitätszahl des Mediums, dessen Füllstand gemessen werden soll.

Bei herkömmlichen Füllstandsmessgeräten weist die elektrische Leiteranordnung im allgemeinen einen Stab oder ein Seil auf, das z. B. an einem an dem Behälter zu befestigenden Flansch angebracht ist und auf diese Weise in den Behälter hineinhängt. Eine derartige Anordnung des elektrischen Leiters kann im wesentlichen mittig im Behälter oder auch in einem Seitenbereich des Behälters erfolgen. Problematisch ist jedoch immer, dass die Anordnung der elektrischen Leiteranordnung in Konflikt stehen kann mit Einbauten im Behälter.

Aus dem Stand der Technik ist aus der EP 1 128 169 A1 ein Füllstandsmessgerät bekannt, bei dem ein Behälter im Deckel oder in der Seite eine Aussparung als Durchgang aufweist, durch die eine Leiteranordnung hindurch in den Innenraum des Behälters hineinragt oder bündig mit der Innenfläche des Behälters abschließt. Es muss daher jeweils ein Stück des Behälters entfernt werden, um die Leiteranordnung passend platzieren zu können.

Die US 5,910,188 offenbart eine flexible Sonde mit einer Separationsanordnung zur Füllstandsmessung einer Flüssigkeit in einem Tank, basierend auf dem TDR-Messprinzip (Time Domain Reflectometry). Hierbei sind die Leiter der Sonde in einer Aufhängung gehaltert, die an der Wand des Behälters befestigt ist.

Die US 6,690,320 B2 zeigt ein Füllstandsmessgerät bei dem ein Behälter mit einem Referenzbehälter bzw. einem sogenannten Bypass verbunden ist. In den Referenzbehälter, der mit dem Behälter über zwei Rohre verbunden ist, ragt eine Leiteranordnung hinein. In solchen Referenzbehältern stellt sich üblicherweise der gleiche Füllstand wie im Behälter ein, weshalb darüber der Füllstand im eigentlichen Behälter gemessen werden kann, ohne dass es zu Konflikten mit Einbauten oder sonstigen Vorgängen im eigentlichen Behälter kommt.

Der Artikel "New sensing techniques set to make an impact" zeigt eine Messanordnung, in der ein elektrischer Leiter an der Innenwandung eines Behälters befestigt ist. Dabei ist der Leiter in einem Isolator eingebettet.

Die JP H07 239263 A offenbart einen kapazitiv arbeitenden Flüssigkeitssensor, der die Anwesenheit von Flüssigkeit in einem horizontalen Rohr detektiert. Das Rohr besteht aus einem elektrisch isolierenden Material, in das zwei Leiter integriert sind.

Es ist die Aufgabe der Erfindung, ein derartiges Füllstandsmessgerät anzugeben, dass eine universell einsetzbare elektrische Leiteranordnung zum Führen des elektromagnetischen Signals aufweist.

Ausgehend von dem eingangs beschriebenen Füllstandsmessgerät ist diese Aufgabe dadurch gelöst, dass die elektrische Leiteranordnung in die Wand des Behälters integriert ist, dass die elektrische Leiteranordnung innerhalb der Wand des Behälters vorhanden ist, dass zwischen der elektrischen Leiteranordnung und dem Medium eine elektrische Isolierung vorhanden ist, dass die elektrische Isolierung Bestandteil der Wand des Behälters ist und dass die Wand des Behälters als Metallwand mit einer elektrisch isolierenden Innenbeschichtung ausgestaltet ist.

Erfindungsgemäß wird damit ein derartiges Füllstandsmessgerät mit einem Behälter bereitgestellt, bei dem der Behälter die erforderliche elektrische Leiteranordnung zum Führen des elektromagnetischen Signals selbst schon "mitbringt". Ein separater Einbau der elektrischen Leiteranordnung ist erfindungsgemäß also nicht erforderlich.

Grundsätzlich kann die elektrische Leiteranordnung auf der Innenwand des Behälters angeordnet sein. Erfindungsgemäß ist jedoch vorgesehen, dass die elektrische Leiteranordnung innerhalb der Wand des Behälters angeordnet ist. Auf diese Weise ist eine Ausgestaltung möglich, bei der sich die Wand des Behälters von ihrer äußeren Ausgestaltung her nicht von einer herkömmlichen Wand unterscheidet.

Grundsätzlich könnte vorgesehen sein, dass die elektrische Leiteranordnung mit dem Medium in galvanisch leitenden Kontakt kommen kann. Erfindungsgemäß ist jedoch zwischen der elektrischen Leiteranordnung und dem Medium eine elektrische Isolierung vorgesehen. Auf diese Weise wird es ermöglicht, die elektrische Leiteranordnung vor aggressiven Medien zu schützen und generell eine chemische Wechselwirkung des Materials der elektrischen Leiteranordnung mit dem zu messenden Medium zu verhindern.

Grundsätzlich könnte eine separate elektrische Isolierung vorgesehen sein. Erfindungsgemäß ist jedoch vorgesehen, dass die elektrische Isolierung Bestandteil der Wand des Behälters ist. Außerdem ist erfindungsgemäß vorgesehen, dass die Wand des Behälters als Metallwand mit einer elektrisch isolierenden Innenbeschichtung ausgestaltet ist, wobei die elektrische Leiteranordnung in die isolierende Innenbeschichtung integriert ist. Gemäß einer bevorzugten Weiterbildung ist diesbezüglich auch vorgesehen, dass als isolierende Innenbeschichtung eine Emaillierung vorgesehen ist. Damit kann erreicht werden, dass die elektrische Leiteranordnung in Form von Leitern bereitgestellt wird, die in die Wand metallischer, emaillierter Behälter eingegossen sind.

Wie oben schon ausgeführt, kann die Wand des Behälters grundsätzlich so ausgestaltet sein, wie bei herkömmlichen Behältern.

Nachfolgend wird die Erfindung unter Bezugnahme auf die Zeichnung erläutert. In der Zeichnung zeigt
- Fig. 1: im Schnitt verschiedene Anordnungen der Leiter einer elektrischen Leiteranordnung eines Füllstandsmessgerätmessgeräts, die nicht Ausführungsbeispiele der Erfindung sind, bei einer Wand des Behälters mit gleichbleibender Wandstärke; und
- Fig. 2: im Schnitt verschiedene Anordnungen der Leiter einer elektrischen Leiteranordnung eines Füllstandsmessgeräts, die nicht Ausführungsbeispiele der Erfindung sind, wobei die Wand jeweils einen Vorsprung aufweist, in dem ein Leiter der elektrischen Leiteranordnung angeordnet ist.

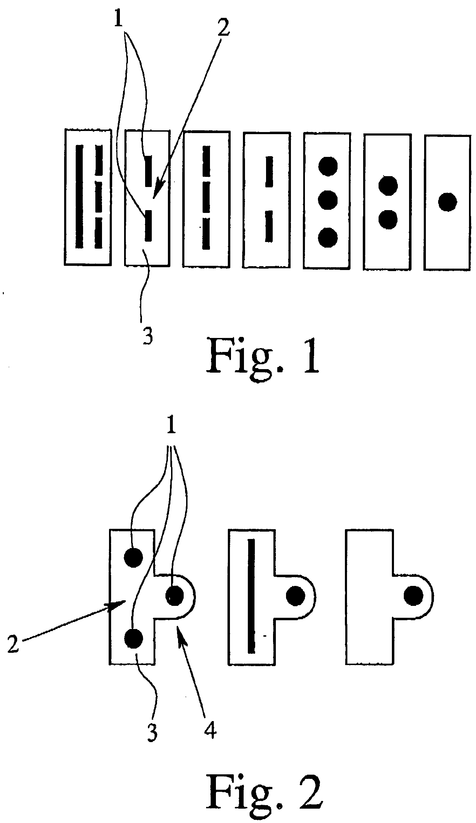

Aus Fig. 1 ist eine Mehrzahl von Schnittdarstellungen ersichtlich, die jeweils einen parallel zum Boden des Behälters darstellenden Schnitt durch einen Abschnitt seiner Wand betreffen, in dem wenigstens ein Leiter 1 der zum Führen des elektromagnetischen Signals vorgesehenen Leiteranordnung 2 angeordnet ist. Wie Fig. 1 entnehmbar, ist eine Vielzahl von Ausgestaltungen der elektrischen Leiter 1, nämlich z. B. als flaches Band oder als Stange, möglich, wobei darüber hinaus die Anordnung der Leiter 1 zueinander ebenfalls eine Vielzahl von Ausgestaltungsmöglichkeiten zeigt.

Wie Fig. 2 entnehmbar, können dabei auch Leiter 1 unterschiedlicher geometrischer Ausgestaltungen, z. B. ein Bandleiter mit einem Stableiter, kombiniert werden. Einfachleiter, wie in Fig. 1 ganz rechts gezeigt, sind natürlich auch möglich.

Bei den vorliegend gezeigten Konstruktionen handelt es sich um eine Wand 3 aus Kunststoff, in die metallische Leiter 1 eingebracht sind. Dabei ist gemäß der aus Fig. 2 ersichtlichen Konstruktion vorgesehen, dass die Wand 3 im Bereich der Anordnung der Leiteranordnung 2 keine gleichbleibende Wandstärke aufweist, sondern mit einem Vorsprung 4 versehen ist. Innerhalb dieses Vorsprungs 4 ist ein Leiter 1 der jeweiligen Leiteranordnung 2 vorgesehen, wobei sich dieser Vorsprung 4 über die gesamte Länge des in ihm vorgesehenen Leiters 1 erstreckt. Auf diese Weise wird es ermöglicht, eine derartige Feldverteilung des von den Leitern 1 geführten elektromagnetischen Signals zu erzielen, dass besonders viel von dem in dem Behälter vorgesehenen Medium "sieht", so dass ein entsprechend gutes Signal-zu-Rausch-Verhältnis erzielbar ist.

## Patentansprüche

1. Füllstandsmessgerät, das nach dem Radar-Prinzip arbeitet, zur Messung des Füllstands eines in einem Behälter vorgesehenen Mediums, mit einer elektrischen Leiteranordnung (2) zum Führen eines elektromagnetischen Signals in den Behälter hinein und zum Führen reflektierter Anteile des elektromagnetischen Signals aus dem Behälter heraus, **dadurch gekennzeichnet, dass** die elektrische Leiteranordnung (2) in die Wand (3) des Behälters integriert ist, dass die elektrische Leiteranordnung (2) innerhalb der Wand (3) des Behälters vorhanden ist, dass zwischen der elektrischen Leiteranordnung (2) und dem Medium eine elektrische Isolierung vorhanden ist, dass die elektrische Isolierung Bestandteil der Wand (2) des Behälters ist und dass die Wand (3) des Behälters als Metallwand mit einer elektrisch isolierenden Innenbeschichtung ausgestaltet ist.

2. Füllstandsmessgerät nach Anspruch 1, **dadurch gekennzeichnet, dass** als isolierende Innenbeschichtung eine Emaillierung vorgesehen ist und dass die elektrische Leiteranordnung (2) in die Wand (3) des Behälters eingegossen ist.

## Claims

1. Level meter employing the radar principle for measuring the fill level of a medium provided in a container having an electric conductor system (2) for conducting an electromagnetic signal into the container and returning reflected components of the electromagnetic signal from the container, **characterized in**
**that** the electric conductor system (2) is integrated in the wall (3) of the container, that the electric conductor system (2) is provided in the wall (3) of the container, that an electric insulation is provided between the electric conductor system (2) and the medium, that the electric insulation is a component of the wall (3) of the container and that the wall (3) of the container is designed as a metal wall with an electrically insulating inner layer.

2. Level meter according to claim 1, **characterized in that** the electrically insulating layer is of enamel and that the electric conductor system (2) is molded in the wall (3) of the container.

## Revendications

1. Appareil de mesure du niveau de remplissage, fonctionnant selon le principe radar, pour mesurer le niveau de remplissage d'un fluide contenu dans un récipient, comprenant un agencement de conducteur électrique (2) pour guider un signal électromagnétique dans le récipient et pour guider des parties réfléchies du signal électromagnétique hors du récipient, **caractérisé en ce que** l'agencement de conducteur électrique (2) est intégré dans la paroi (3) du récipient, **en ce que** l'agencement de conducteur électrique (2) est prévu à l'intérieur de la paroi (3) du récipient, **en ce qu'**entre l'agencement de conducteur électrique (2) et le fluide est prévue une isolation électrique, **en ce que** l'isolation électrique fait partie de la paroi (2) du récipient et **en ce que** la paroi (3) du récipient est configurée sous forme de paroi métallique avec un revêtement intérieur électriquement isolant.

2. Appareil de mesure du niveau de remplissage selon la revendication 1, **caractérisé en ce que** l'on prévoit un émaillage en tant que revêtement intérieur isolant et **en ce que** l'agencement de conducteur électrique (2) est incorporé par moulage à l'intérieur de la paroi (3) du récipient.
